(19) **Europäisches Patentamt / European Patent Office / Office européen des brevets**

(11) **EP 4 472 026 A1**

(12) **EUROPEAN PATENT APPLICATION**
published in accordance with Art. 153(4) EPC

(43) Date of publication:
**04.12.2024 Bulletin 2024/49**

(21) Application number: **23746444.1**

(22) Date of filing: **29.01.2023**

(51) International Patent Classification (IPC):
*H02J 50/00* $^{(2016.01)}$    *H02J 50/10* $^{(2016.01)}$
*H02J 50/80* $^{(2016.01)}$    *H02J 7/00* $^{(2006.01)}$

(52) Cooperative Patent Classification (CPC):
Y02B 40/00

(86) International application number:
**PCT/CN2023/073703**

(87) International publication number:
**WO 2023/143567 (03.08.2023 Gazette 2023/31)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **30.01.2022 CN 202210113910**

(71) Applicant: **VIVO MOBILE COMMUNICATION CO., LTD.**
**Dongguan, Guangdong 523863 (CN)**

(72) Inventors:
• **LIN, Hanzhong**
  **Dongguan, Guangdong 523863 (CN)**
• **HOU, Zhichun**
  **Dongguan, Guangdong 523863 (CN)**

(74) Representative: **Lavoix**
**Bayerstraße 83**
**80335 München (DE)**

(54) **CHARGING APPARATUS**

(57)    This application discloses a charging apparatus, a charging method, and an electronic device, and pertains to the field of electronic technologies. The charging apparatus includes a housing, a first charging coil, a device detection module, and a coil adjusting module. The first charging coil, the device detection module, and the coil adjusting module are all disposed in the housing. The device detection module is connected to the coil adjusting module and configured to detect a device type of a to-be-charged device placed on an outer surface of the housing to obtain target device type information, and send the target device type information to the coil adjusting module. The coil adjusting module is connected to the first charging coil and configured to adjust a size of the first charging coil based on the target device type information, enabling an adjusted size of the first charging coil to match a size of a second charging coil in the to-be-charged device.

FIG. 1

## Description

## CROSS-REFERENCE TO RELATED APPLICATIONS

The present invention claims priority to Chinese Patent Application No. 202210113910.5, filed with the China National Intellectual Property Administration on January 30, 2022 and entitled "CHARGING APPARATUS", which is incorporated herein by reference in its entirety.

## TECHNICAL FIELD

This application relates to the field of electronic technologies, and specifically, to a charging apparatus.

## BACKGROUND

With the rapid development of electronic technologies, the types of electronic devices are becoming increasingly diverse. The size differences among electronic devices of different types are significant, leading to similarly large variations in the sizes of the charging coils in the charging apparatuses adapted to the electronic devices.

For users, having multiple charging apparatuses adapted to different device types causes occupancy of a large space and inconvenience of transport. Using a single charging apparatus to charge multiple electronic devices of different device types may lead to reduced charging efficiency due to a mismatch between sizes of the electronic devices and the charging coil in the charging apparatus.

## SUMMARY

An objective of embodiments of this application is to provide a charging apparatus, to resolve the problem of how to balance the compatibility and charging efficiency of the charging apparatus.

According to a first aspect, an embodiment of this application provides a charging apparatus. The charging apparatus includes a housing, a first charging coil, a device detection module, and a coil adjusting module. The first charging coil, the device detection module, and the coil adjusting module are all disposed in the housing.

The device detection module is connected to the coil adjusting module and configured to detect a device type of a to-be-charged device placed on an outer surface of the housing to obtain target device type information, and send the target device type information to the coil adjusting module.

The coil adjusting module is connected to the first charging coil and configured to adjust a size of the first charging coil based on the target device type information, enabling an adjusted size of the first charging coil to match a size of a second charging coil in the to-be-charged device.

In this embodiment of this application, the charging apparatus includes a housing, a first charging coil, a device detection module, and a coil adjusting module. The first charging coil, the device detection module, and the coil adjusting module are all disposed in the housing. The device detection module is connected to the coil adjusting module and configured to detect a device type of a to-be-charged device placed on an outer surface of the housing to obtain target device type information, and send the target device type information to the coil adjusting module. The coil adjusting module is connected to the first charging coil and configured to adjust a size of the first charging coil based on the target device type information, enabling an adjusted size of the first charging coil to match a size of a second charging coil in the to-be-charged device. According to the technical solution of this embodiment of this application, the first charging coil in the charging apparatus can be adjusted flexibly based on the device type of the to-be-charged device, enabling the size of the first charging coil to match the size of the second charging coil in the to-be-charged device, such that one charging apparatus is used to efficiently charge to-be-charged devices of different device types, improving the charging efficiency and compatibility of the charging apparatus.

## BRIEF DESCRIPTION OF DRAWINGS

FIG. 1 is a first schematic structural diagram of a charging apparatus according to an embodiment of this application;
FIG. 2 is a second schematic structural diagram of a charging apparatus according to an embodiment of this application;
FIG. 3 is a third schematic structural diagram of a charging apparatus according to an embodiment of this application;
FIG. 4 is a fourth schematic structural diagram of a charging apparatus according to an embodiment of this application;
FIG. 5 is a fifth schematic structural diagram of a charging apparatus according to an embodiment of this application;
FIG. 6 is a schematic flowchart of a charging method according to an embodiment of this application;
FIG. 7 is a schematic modular diagram of an electronic device according to an embodiment of this application; and
FIG. 8 is a schematic diagram of a hardware structure of an electronic device according to an embodiment of this application.

Reference signs are described as follows:

101. housing, 102. first charging coil, 1021. first-stage line, 1022. second-stage line, 103. rotation wheel, 1031. axis, 104. coil limiting rod, 105. motor assembly, 106. first fixing structure, 107. line support;

700. electronic device, 701. processor, 702. memory;

800. electronic device, 801. radio frequency unit, 802. network module, 803. audio output unit, 804. input unit, 8041. graphics processing unit, 8042. microphone, 805. sensor, 806. display unit, 8061. display panel, 807. user input unit, 8071. touch panel, 8072. other input devices, 808. interface unit, 809. memory, and 810. processor.

## DETAILED DESCRIPTION OF EMBODIMENTS

The following clearly and completely describes the technical solutions in the embodiments of this application with reference to the accompanying drawings in the embodiments of this application. Apparently, the described embodiments are only some rather than all of the embodiments of this application. All other embodiments obtained by persons of ordinary skill in the art based on the embodiments of this application shall fall within the protection scope of this application.

The terms "first", "second", and the like in this specification and claims of this application are used to distinguish between similar objects rather than to describe a specific order or sequence. It should be understood that data used in this way are interchangeable in appropriate circumstances such that the embodiments of this application can be implemented in other orders than the order illustrated or described herein. In addition, objects distinguished by "first" and "second" are generally of a same type, and the quantities of the objects are not limited, for example, there may be one or more first objects. In addition, "and/or" in the specification and claims represents at least one of connected objects, and the character "/" generally indicates that the contextually associated objects have an "or" relationship.

With reference to the accompanying drawings, a processor provided in the embodiments of this application is described below in detail by using specific embodiments and application scenarios thereof.

In an embodiment of this application, the charging apparatus may be a wireless charging apparatus, a charging apparatus with both a wireless charging function and a wired charging function, or any type of charging apparatus constructed based on the following wireless charging principle. The to-be-charged device may be various types of electronic devices that need to be charged frequently, such as mobile phones, tablets, or smart watches.

The principle of wireless charging can be based on the mutual inductance transmission capability of two coils located respectively inside a charging apparatus and a to-be-charged device, to charge the to-be-charged device through the charging apparatus. During specific implementation, L1 may be used to represent a first charging coil in the charging apparatus, and L2 may be used to represent a second charging coil in the to-be-charged device. Then, L1 may be used as a transmitting end of electrical energy, while L2 may be used as a receiving end of electrical energy.

If the charging current of L1 is denoted as Ir, the induced magnetic flux $\phi$ generated by Ir on L2 can be calculated using the following formula:

$$\varphi = M I_P \qquad (1)$$

In formula (1), M represents a mutual inductance between L1 and L2. M can be obtained using the following formula:

$$M = \frac{u_0}{4\pi} \oint L1 \oint L2 \frac{dl_1 \cdot dl_2}{|X1 - X2|} \qquad (2)$$

In formula (2), $u_0$ represents a magnetic constant, dl1 represents an infinitesimal line element of L1, dl2 represents an infinitesimal line element of L2, X1 represents a position of the infinitesimal line element dl1, and X2 represents a position of the infinitesimal line element dl2.

From formula (2), it can be known that when the sizes of L1 and L2 are the same and L1 is parallel to L2, M can reach its maximum value.

An induced electromotive force $U_M$ generated on L2 due to the induced magnetic flux $\phi$ can be calculated using the following formula:

$$U_M = \frac{d\varphi}{dt} \qquad (3)$$

It can be known from the foregoing formula that the induced electromotive force $U_M$ is positively proportional to the induced magnetic flux $\phi$. When the current $I_P$ is a constant, the sizes of L1 and L2 are the same, and L1 is parallel to L2, M can reach its maximum value. In addition, the induced electromotive force $U_M$ also reaches its maximum value, leading to the highest charging efficiency of the charging apparatus.

During specific implementation, if the size difference between L1 and L2 is large, the mutual inductance between L1 and L2 is relatively small, leading to low charging efficiency of the charging apparatus.

When it is necessary to meet charging needs of electronic devices of different types in a case that a user needs to carry various electronic devices for business or personal travel or the user uses various electronic devices at home, if multiple charging apparatuses adapted to each electronic device are used to charge the various electronic devices, the multiple charging apparatuses occupy a large space, and it is cumbersome to organize and find the charging apparatuses. Therefore, a charging apparatus is needed to provide charging services for electronic devices of different types.

If the charging apparatus uses only one L1 to charge electronic devices of multiple different types, although the charging apparatus can be expanded in compatibility, it can be adapted to only one device type. The difference between the L1 and individual L2 in other electronic devices of various types may be large, reducing the charging efficiency.

If the charging apparatus is provided with multiple L1s in different sizes to charge electronic devices of different types, although the compatibility and the charging efficiency of the charging apparatus can be improved, one charging apparatus including L1s of different sizes significantly increases the occupation volume and production costs of the charging apparatus.

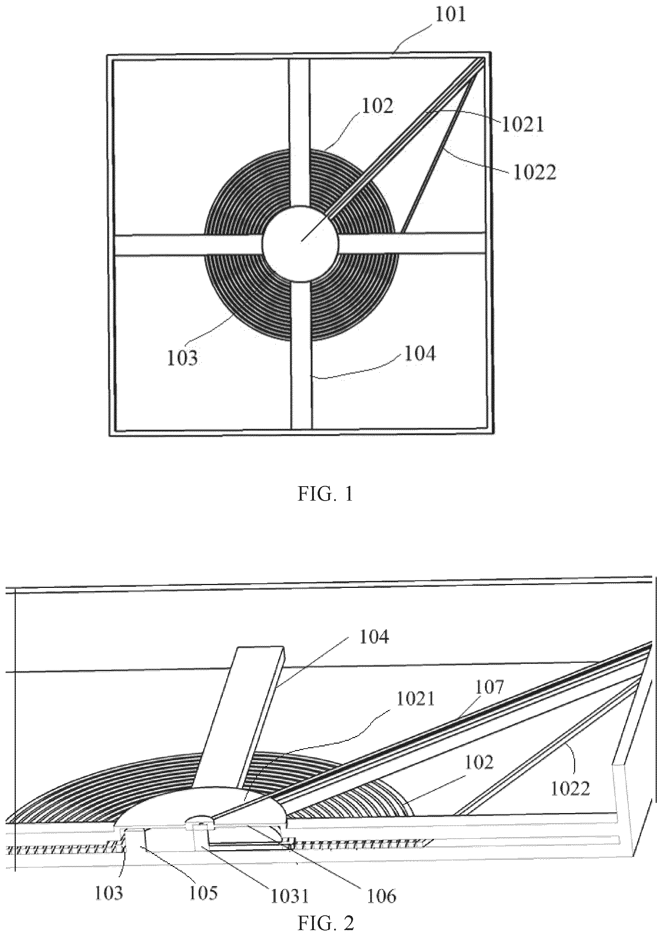

To overcome the foregoing defect, an embodiment of this application provides a charging apparatus, and reference may be made to FIG. 1. FIG. 1 is a first schematic structural diagram of a charging apparatus according to an embodiment of this application. The upper part and the lower part respectively show the internal structure of the charging apparatus at two different views.

As shown in the figure, the charging apparatus includes a housing 101, a first charging coil 102, a device detection module, and a coil adjusting module. The first charging coil 102, the device detection module, and the coil adjusting module are all disposed in the housing 101.

The device detection module is connected to the coil adjusting module and configured to detect a device type of a to-be-charged device placed on an outer surface of the housing 101, obtain target device type information, and send the target device type information to the coil adjusting module.

The coil adjusting module is connected to the first charging coil 102 and configured to adjust a size of the first charging coil 102 based on the target device type information, enabling an adjusted size of the first charging coil 102 to match a size of a second charging coil in the to-be-charged device.

The housing 101 may be a housing of a shell of the charging apparatus, and the housing 101 may accommodate at least the following structures: the first charging coil 102, the device detection module, and the coil adjusting module. The housing 101 may be cubic, rectangular, or in any other preset shape.

The first charging coil 102 may be a coil with an unfixed winding trajectory. For example, the first charging coil 102 may have a winding trajectory that changes with the tightness of the first charging coil 102, with a large coil area in a loose state or a small coil area in a tight state. The first charging coil 102 may alternatively be laid on a fixed coil support, enabling the winding trajectory of the first charging coil 102 to be fixed by the coil support, and have a coil area that may be presented by a in the case of N winding turns and a coil area that may be presented by b in the case of M winding turns (M > N), where b>a. In addition, the coil area and the number of winding turns of the first charging coil 102 have a predetermined correspondence.

The coil support may be a coil track support fixed onto an inner surface of the housing and configured for laying the first charging coil 102. In a case that the first charging coil 102 is laid on the coil support, the tightness of the first charging coil 102 is fixed. In a case that the number of winding turns of the first charging coil 102 laid on the coil support increases, the coil area of the first charging coil 102 increases; and in a case that the number of winding turns of the first charging coil 102 laid on the coil support decreases, the coil area of the first charging coil 102 decreases.

The device detection module may be a near field communication (NFC) or a sensor, or may be another apparatus or a module with a device detection function and/or a device type recognizing function. The device detection module detects the device type of the to-be-charged device, obtains the target device type information, and sends the target device type information to the coil adjusting module, such that the coil adjusting module can determine a corresponding target coil size based on the target device type information.

When the charging apparatus charges the to-be-charged device, the to-be-charged device may be placed in a specified region of the outer surface of the charging apparatus, such that the second charging coil in the to-be-charged device is parallel to the first charging coil 102, and a distance between a center of the first charging coil 102 and a center of the second charging coil is less than or equal to a preset distance threshold.

Before the device detection module detects the device type, the device detection module may be further configured to detect whether there is an electronic device in the specified region of the outer surface. The NFC module is used as an example for description. For example, when a mobile phone is placed in the specified region of the outer surface of the charging apparatus, a second charging coil in the mobile phone can send a communication signal to the first charging coil 102 according to the wireless charging standard protocol, and the NFC module can detect the communication signal and determine an electronic device placed in the specified region of the outer surface based on the communication signal.

The NFC module is used as an example for describing how the device detection module detects the device type. For example, when a tablet is placed in the specified region of the outer surface of the charging apparatus, a second charging coil in the tablet can send a communication signal to the first charging coil 102 according to the wireless charging standard protocol, and the NFC module can detect the communication signal and determine, based on the communication signal, that a device type of the electronic device sending the communication signal is a tablet.

The coil adjusting module may be a motor assembly 105 or other module or apparatus that can adjust the coil area.

Optionally, the coil adjusting module includes a motor assembly 105, and the charging apparatus further includes a rotation wheel 106. The motor assembly 105 is connected to the rotation wheel 106; and the first charging coil (102) is wound on the rotation wheel 106.

FIG. 2 is a second schematic structural diagram of a charging apparatus according to an embodiment of this application.

As shown in FIG. 2, the motor assembly 105 is connected to the rotation wheel 106; and the first charging coil 102 is wound on the rotation wheel 103. The motor assembly 105, by connecting to the rotation wheel 106, can drive the rotation wheel to rotate clockwise or anticlockwise, so as to change the area of the first charging coil 102 wound on the rotation wheel.

The first charging coil 102 wound on the rotation wheel may be a coil with an unfixed winding trajectory. For example, in a case that the motor assembly 105 drives the rotation wheel to rotate clockwise, the first charging coil 102 tightens, and the area of the charging coil of the first charging coil 102 decreases; and in a case that the motor assembly 105 drives the rotation wheel to rotate anticlockwise, the first charging coil 102 loosens, and the area of the charging coil of the first charging coil 102 increases.

The first charging coil 102 wound on the rotation wheel may be alternatively laid on the fixed coil support, enabling the winding trajectory of the first charging coil 102 to be fixed by the coil support, and the coil area of the first charging coil 102 is determined by the number of winding turns of the first charging coil 102 within the coil support. For example, in a case that the motor assembly 105 drives the rotation wheel to rotate clockwise, the number of winding turns of the first charging coil 102 in the coil support increases, and the area of the charging coil of the first charging coil 102 increases. In a case that the motor assembly 105 drives the rotation wheel to rotate anticlockwise, the number of winding turns of the first charging coil 102 in the coil support decreases, and the area of the charging coil of the first charging coil 102 decreases.

Optionally, the charging apparatus further includes a rotation wheel 103, and a first fixing structure 106 and a line support 107 of the rotation wheel 103. The first fixing structure 106 is connected to an axis 1031 of the rotation wheel 103, and fixes the axis 1031 to an inner surface of the housing 101. A first end of the line support 107 is connected to the first fixing structure 106, and a second end of the line support 107 is connected to a first position in the housing 101. The first charging coil 102 is wound on the rotation wheel 103. A first-stage line 1021 of the first charging coil 102 is laid on the line support 107. The first-stage line 1021 is a coil line of the first charging coil 102 close to an end of the axis 1031; and a second-stage line 1022 of the first charging coil 102 is connected to the first position in the housing 101. The second-stage line 1022 is a coil line of the first charging coil 102 away from an end of the axis 1031.

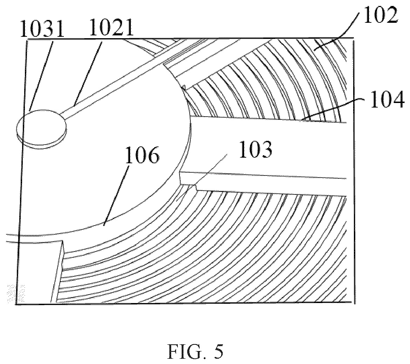

Detailed description is made below with reference to FIGs. 1, 2, and 5. FIG. 5 is a fifth schematic structural diagram of a charging apparatus according to an embodiment of this application.

As shown in FIG. 2, the first fixing structure 106 of the rotation wheel 103 is connected to the axis 1031 of the rotation wheel 103, so as to fix the axis 1031 of the rotation wheel 103 on the inner surface of the housing 101.

Referring to FIGs. 1, 2, and 5, the axis 1031 of the rotation wheel 103 is located at the center of the first fixing structure 106. As shown in FIG. 5, an end of the first-stage line 1021 of the first charging coil 102 close to the axis can be considered as passing through the axis.

The line support 107 may be a line track support for laying the first-stage line 1021 of the first charging coil 102. A first end of the line support 107 is connected to the first fixing structure 106, and a second end of the line support 107 is connected to a first position in the housing 101.

As shown in FIGs. 1 and 2, in a case that the charging apparatus is a cuboid and its cross section is a square, the first position may be a position where a distance to a specified corner of the charging apparatus in the shape of cuboid is less than a preset distance threshold, allowing the line support 107 between the first position and the axis 1031 to be parallel to the first charging coil. Taking FIG. 1 as an example, in a cross section in the charging apparatus provided in the charging apparatus embodiment in FIG. 1, the cross section in the charging apparatus may be a square, and the first position may be at the top-right corner of the square. The first position may alternatively be another preset position in the housing 101.

The first-stage line 1021 of the first charging coil 102 may be a coil positive line, and the second-stage line 1022 of the first charging coil 102 may be a coil negative line, where the two are interchangeable. As shown in FIG. 1, the first-stage line 1021 may be a coil line of the first charging coil 102 close to an end of the axis 1031; and the second-stage line 1022 is a coil line of the first charging coil 102 away from an end of the axis 1031.

An end of the first-stage line 1021 away from the axis 1031 may be connected to the first position; and an end of the second-stage line 1022 away from an end of the axis 1031 may be connected to the first position.

Optionally, the end of the second-stage line 1022 away from the axis 1031 is fixedly connected to the first position in the housing 101. In a case that the rotation wheel 103 rotates, the rotation wheel 103 drives the first-stage line 1021 to move along the line support 107, changing the tightness of the first charging coil 102.

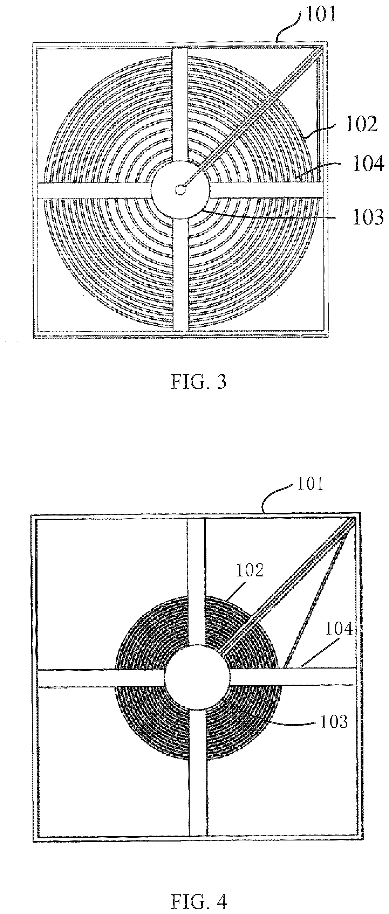

FIG. 3 is a third schematic structural diagram of a charging apparatus according to an embodiment of this application. FIG. 4 is a fourth schematic structural diagram of a charging apparatus according to an embodiment of this application. In FIGs. 3 and 4, the tightness of the first charging coil 102 changes. If x1 is used to represent the tightness level of the first charging coil 102 in FIG. 3, x2 represents the tightness level of the first charging coil 102 in FIG. 4, larger values of x1 and x2 indicate looser levels, and smaller values of x1 and x2 indicate tenser levels, x1>x2, that is, the first charging coil 102 in FIG. 3 is looser than the first charging coil 102 in FIG. 4.

The end of the second-stage line 1022 away from the axis 1031 is fixedly connected to the first position in the housing 101, and regardless of clockwise rotation or anticlockwise rotation of the rotation wheel 103, the end of the second-stage line 1022 away from the axis 1031 does not move along with the rotation of the rotation wheel 103. In this case, the rotation wheel 103 can drive the first-stage line 1021 to move along the line support 107, changing the tightness of the first charging coil 102.

For example, the rotation wheel 103 in rotation can drive the first-stage line 1021 to move along the line support 107 in a direction away from the axis and close to the first position, and the end of the second-stage line 1022 away from the axis 1031 stays still, so that the tightness of the first charging coil 102 changes, making the first charging coil 102 to be tighter and have a decreased coil area.

In another example, the rotation wheel 103 in rotation can drive the first-stage line 1021 to move along the line support 107 in a direction close to the axis and away from the first position, and the end of the second-stage line 1022 away from the axis 1031 stays still, so that the tightness of the first charging coil 102 changes, making the first charging coil 102 to be looser and have an increased coil area.

Optionally, the end of the first-stage line 1021 away from the axis 1031 is fixedly connected to the first position in the housing 101. In a case that the rotation wheel 103 rotates, the rotation wheel 103 drives the second-stage line 1022 to tighten or loosen, changing the tightness of the first charging coil 102.

The end of the first-stage line 1021 away from the axis 1031 is fixedly connected to the first position in the housing 101, and regardless of clockwise rotation or anticlockwise rotation of the rotation wheel 103, the end of the first-stage line 1021 away from the axis 1031 does not move along with the rotation of the rotation wheel 103. In this case, the rotation wheel 103 can drive the second-stage line 1022 to move, enabling the first charging coil to tighten or loosen.

For example, the rotation wheel 103 in rotation can drive the second-stage line 1022 to move in a direction away from the first position, and the end of the first-stage line 1021 away from the axis 1031 stays still, so that the tightness of the first charging coil 102 changes, making the first charging coil 102 to be looser and have an increased coil area.

In another example, the rotation wheel 103 in rotation can drive the second-stage line 1022 to move in a direction close to the first position, and the end of the first-stage line 1021 away from the axis 1031 stays still, so that the tightness of the first charging coil 102 changes, making the first charging coil 102 to be tighter and have a decreased coil area.

Optionally, the charging apparatus further includes a coil support, and the first charging coil 102 is laid at the coil support. The end of the first-stage line 1021 away from the axis 1031 is fixedly connected to the first position in the housing 101. In a case that the rotation wheel 103 rotates, the rotation wheel 103 drives the second-stage line 1022 to move along the coil support, changing the number of winding turns of the first charging coil 102 around the axis 1031.

The coil support may be a coil track support fixed onto an inner surface of the housing and configured for laying the first charging coil 102. In a case that the first charging coil 102 is laid on the coil support, the tightness of the first charging coil 102 is fixed, and the coil area is determined based on the number of winding turns around the axis 1031.

The end of the first-stage line 1021 away from the axis 1031 is fixedly connected to the first position in the housing 101, and regardless of clockwise rotation or anticlockwise rotation of the rotation wheel 103, the end of the first-stage line 1021 away from the axis 1031 does not move along with the rotation of the rotation wheel 103. In this case, the rotation wheel 103 can drive the second-stage line 1022 to move, changing the number of winding turns of the first charging coil 102 around the axis 1031.

For example, the rotation wheel 103 in rotation can drive the second-stage line 1022 to move in a direction away from the first position, and the end of the first-stage line 1021 away from the axis 1031 stays still, increasing the number of winding turns of the first charging coil 102 around the axis 1031 and its coil area.

In another example, the rotation wheel 103 in rotation can drive the second-stage line 1022 to move in a direction close to the first position and the end of the first-stage line 1021 away from the axis 1031 stays still, decreasing the number of winding turns of the first charging coil 102 around the axis 1031 and its coil area.

Optionally, the charging apparatus further includes a coil support, and the first charging coil 102 is laid on the coil support. The end of the second-stage line 1022 away from the axis 1031 is fixedly connected to the first position in the housing 101. In a case that the rotation wheel 103 rotates, the rotation wheel 103 drives the first-stage line 1021 to move along the line support 107, changing the number of winding turns of the first charging coil 102 around the axis 1031.

The end of the second-stage line 1022 away from the axis 1031 is fixedly connected to the first position in the housing 101, and regardless of clockwise rotation or anticlockwise rotation of the rotation wheel 103, the end of the second-stage line 1022 away from the axis 1031 does not move along with the rotation of the rotation wheel 103. In this case, the rotation wheel 103 can drive the first-stage line 1021 to move along the line support 107, changing the number of winding turns of the first charging coil 102 around the axis 1031.

For example, the rotation wheel 103 in rotation can drive the first-stage line 1021 to move along the line support 107 in a direction away from the axis and close to the first position, and the end of the second-stage line 1022 away from the axis 1031 stays still, decreasing the number of winding turns of the first charging coil 102 around the axis 1031 and its coil area.

For another example, the rotation wheel 103 in rotation can drive the first-stage line 1021 to move along the line support 107 in a direction close to the axis and away from the first position, and the end of the second-stage line 1022 away from the axis 1031 stays still, increasing the number of winding turns of the first charging coil 102 around the axis 1031 and its coil area.

Optionally, the charging apparatus further includes at least two coil limiting rods 104. A first end of each of the coil limiting rods 104 is connected to the first fixing structure 106; a second end of each of the coil limiting rods 104 is connected to a corresponding second position in the housing 101; and each of the coil limiting rods 104 is parallel to the first charging coil 102.

The at least two coil limiting rods 104 may include four coil limiting rods 104. The at least two coil limiting rods 104 may alternatively be another preset quantity of coil limiting rods 104.

FIG. 1 is used as an example for description. In the charging apparatus embodiment shown in FIG. 1, the cross section of the first fixing structure 106 may be circular, an internal interface of the housing 101 may be square, and the charging apparatus may include four coil limiting rods 104 on the top, bottom, left, and right. The first end of each coil limiting rod 104 may be connected to the first fixing structure 106 and has a different connection point. For example, the coil limiting rod 104 located above may be connected to a topmost point of the circle corresponding to the first fixing structure 106, and the coil limiting rod 104 on the left may be connected to a leftmost point of the circle corresponding to the first fixing structure 106. The second end of each coil limiting rod 104 may be connected to a corresponding second position in the housing 101. For example, the coil limiting rod 104 located above may be connected to a middle point on the upper side of the square corresponding to the housing 101, and the coil limiting rod 104 on the right may be connected to a middle point on the right side of the square corresponding to the housing 101.

As shown in FIG. 1, in each two coil limiting rods 104 adj acent to each other, a connection line from a connection point between the first coil limiting rod and the first fixing structure 106 to a central point of the first fixing structure 106 and a connection line from a connection point between the second coil limiting rod and the first fixing structure 106 to a central point of the first fixing structure 106 can form an included angle of 90 degrees.

Each coil limiting rod 104 is connected to both the first fixing structure 106 and the housing 101, allowing the first charging coil 102 to be fixed to the inner surface of the housing 101 and the first charging coil 102 to remain planar. In other words, regardless of an increase or decrease in the number of winding turns of the first charging coil 102 or the change in the tightness of the first charging coil 102, the first charging coil 102 is fixed to the inner surface and remains planar, avoiding the problem that the change in the number of winding turns or the tightness of the first charging coil 102 may lead to coil displacement or chaotic coil winding.

In the embodiment as shown in FIG. 1, the charging apparatus includes a housing, a first charging coil, a device detection module, and a coil adjusting module. The first charging coil, the device detection module, and the coil adjusting module are all disposed in the housing. The device detection module is connected to the coil adjusting module and configured to detect a device type of a to-be-charged device placed on an outer surface of the housing to obtain target device type information, and send the target device type information to the coil adjusting module. The coil adjusting module is connected to the first charging coil and configured to adjust a size of the first charging coil based on the target device type information, enabling an adjusted size of the first charging coil to match a size of a second charging coil in the to-be-charged device. According to the technical solution of this embodiment of this application, the first charging coil in the charging apparatus can be adjusted flexibly based on the device type of the to-be-charged device, enabling the size of the first charging coil to match the size of the second charging coil in the to-be-charged device, such that one charging apparatus is used to efficiently charge to-be-charged devices of different device types, thus improving the charging efficiency and compatibility of the charging apparatus.

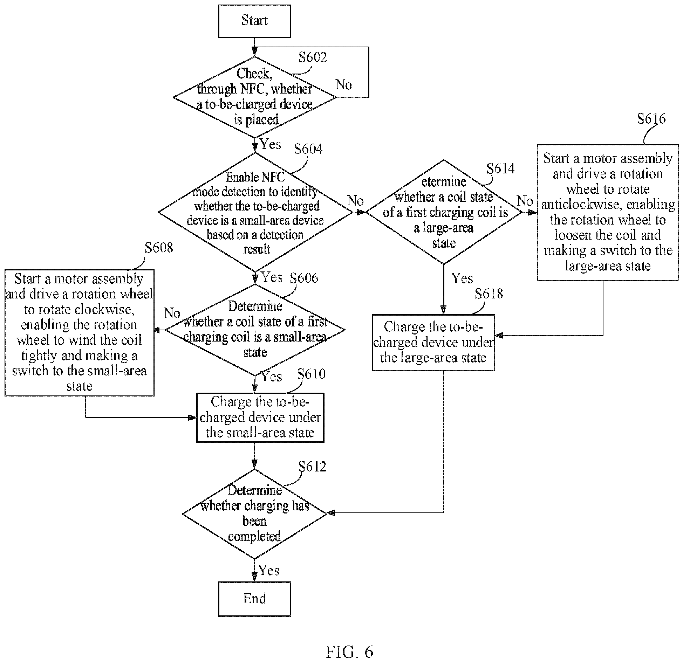

Based on the technical concept same as in the foregoing charging apparatus embodiment, this application further includes a charging method. The charging method is applicable to the charging apparatus provided in the foregoing charging apparatus embodiment. FIG. 6 is a schematic flowchart of a charging method according to an embodiment of this application.

With reference to FIG. 6, step S602: Check, through NFC, whether a to-be-charged device is placed.

The NFC module in the charging apparatus detects whether there is an electronic device in a specified region of an outer surface of the charging apparatus. If there is, the electronic device is used as the to-be-charged device. The to-be-charged device may be various device types of electronic devices that need to be charged frequently, such as mobile phones, tablets, or smart watches.

It should be noted that if a fully charged electronic device, that is, an electronic device without a charging requirement, is placed in the specified region of the outer surface of the charging apparatus, it is also detected by the NFC module and used as the to-be-charged device. However, actually, the charging apparatus will not charge the electronic device in a case that the electronic device is in full charge.

If so, step S604 is performed.

S604: Enable NFC mode detection to detect whether the to-be-charged device is a small-area device based on a detection result.

If so, step S606 is performed; and if not, step S614 is performed.

The charging apparatus can be preset with multiple charging states, and under each charging state, can charge a to-be-charged device of a corresponding device size most efficiently.

For example, the multiple charging states can include a first charging state and a second charging state. The to-be-charged devices with different device sizes and types may include large-area devices and small-area devices. Under the first charging state, the coil state of the first charging coil may be a large-area state; and under the second charging state, the coil state of the first charging coil may be a small-area state. The charging apparatus under the first charging state can charge the large-area devices most efficiently; and the charging apparatus under the second charging state can charge the small-area devices most efficiently.

The large-area devices and the small-area devices may be preset. For example, the large-area devices may be tablets, the small-area devices may be mobile phones, and an area of a tablet is larger than that of a mobile phone.

To determine how the charging state of the charging apparatus is adjusted, the charging apparatus can enable NFC mode detection to detect whether a to-be-charged device is a small-area device based on a detection result.

Step S606: Determine whether the coil state of the first charging coil is the small-area state.

If so, step S610 is performed; and if not, step S608 is performed.

Step S608: Start the motor assembly and drive the rotation wheel to rotate clockwise, enabling the rotation wheel to wind the coil tightly and making a switch to the small-area state.

In a case that the coil state of the first charging coil is the large-area state, the motor assembly is started and the rotation wheel is driven to rotate clockwise, enabling the rotation wheel to wind the coil tightly and making a switch to the small-area state.

Step S610: Charge the to-be-charged device under the small-area state.

In addition, during specific implementation, in the process of the charging apparatus charging the to-be-charged device, the charging power of the to-be-charged device is not constant. For example, when the remaining power of the mobile phone is 20%, the charging power of the charging apparatus for charging the mobile phone is a first power, and when the remaining power of the mobile phone is 85%, the charging power of the charging apparatus for charging the mobile phone is a second power. The second power is less than the first power, and a difference between the first power and the second is less than or equal to a preset power threshold. It can be understood that during charging, the charging power may be different at a different status, but the difference is not large. After step 608 is performed to enable the small-area state after adjustment to match the size of the to-be-charged device, in the process of the charging apparatus in the small-area state charging the to-be-charged device, the first charging coil can be adjusted by a small amount based on the charging power of the to-be-charged device, enabling an adjusted size of the first charging coil to match the charging power.

Step S612: Determine whether charging has been completed.

If so, the procedure is completed.

Step S614: Determine whether a coil state of a first charging coil is a large-area state.

If so, step S618 is performed; and if not, step S616 is performed.

Step S616: Start a motor assembly and drive a rotation wheel to rotate anticlockwise, enabling the rotation wheel to loosen the coil and making a switch to the large-area state.

In a case that the coil state of the first charging coil is the small-area state, the motor assembly is started to drive the rotation wheel rotate clockwise, enabling the rotation wheel to wind the coil tightly and making a switch to the large-area state.

Step S618: Charge the to-be-charged device under the large-area state.

During specific implementation, after step 616 is performed to enable the adjusted large-area state to match the size of the to-be-charged device, in the process of the charging apparatus in the large-area state charging the to-be-charged device, the first charging coil can be adjusted by a small amount based on the charging power of the to-be-charged device, enabling an adjusted size of the first charging coil to match the charging power.

The foregoing charging method embodiment is essentially similar to the charging apparatus embodiment, and therefore is described briefly. For related information, refer to descriptions of the related parts in the apparatus embodiment.

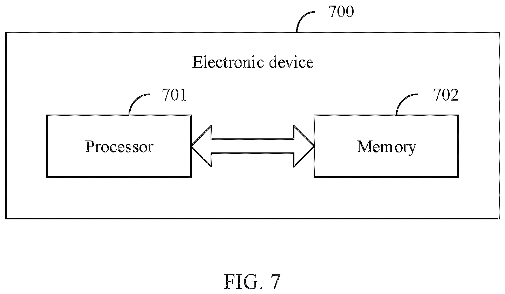

Optionally, as shown in FIG. 7, an embodiment of this application provides an electronic device 700, including a processor 701, a memory 702, and a program or instructions stored in the memory 702 and capable of running on the processor 701, where when the program or instructions are executed by the processor 701, the processes of the foregoing charging method embodiment are implemented, with the same technical effects achieved. To avoid repetition, details are not repeated herein.

The processor 701 can include each structure in the foregoing charging apparatus embodiment, and details are not described herein again.

It should be noted that the electronic device in this embodiment of this application includes the foregoing mobile electronic device and non-mobile electronic device.

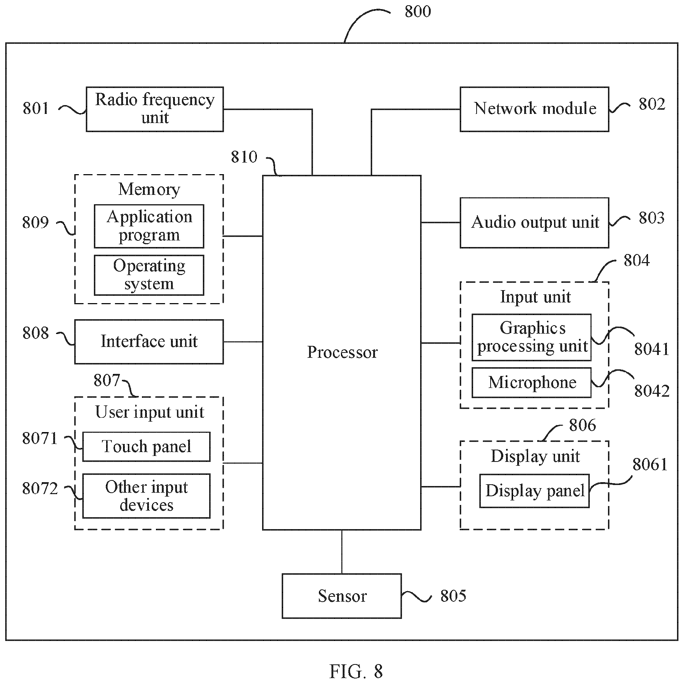

FIG. 8 is a schematic diagram of a hardware structure of an electronic device according to an embodiment of this application.

The electronic device 800 includes but is not limited to components such as a radio frequency unit 801, a network module 802, an audio output unit 803, an input unit 804, a sensor 805, a display unit 806, a user input unit 807, an interface unit 808, a memory 809, and a processor 810.

The processor 810 in the figure can include each structure in the foregoing processor embodiment, and details are not repeated herein. Those skilled in the art can understand that the electronic device 800 may further include a power supply (for example, a battery) that supplies power to various components. The power supply may be logically connected to the processor 810 through a power management system, so that functions such as charge and discharge management and power consumption management are implemented by using the power management system. The structure of the electronic device shown in FIG. 8 does not constitute a limitation on the electronic device. The electronic device may include more or fewer components than shown in the figure, or some components may be combined, or there may be a different component layout. Details are not repeated herein.

The processor 810 can be used to implement the processes of the foregoing charging method embodiment, with the same technical effects achieved. To avoid repetition, details are not repeated herein.

It can be understood that in this embodiment of this application, the input unit 804 may include a graphics processing unit (Graphics Processing Unit, GPU) 8041 and a microphone 8042. The graphics processing unit 8041 processes image data of a still picture or video obtained by an image capture apparatus (such as a camera) in a video capture mode or an image capture mode. The display unit 806 may include a display panel 8061, and the display panel 8061 may be configured in a form of a liquid crystal display, an organic light-emitting diode, and the like. The user input unit 807 includes a touch panel 8071 and other input devices 8072. The touch panel 8071 is also referred to as a touchscreen. The touch panel 8071 may include two parts: a touch detection apparatus and a touch controller. The other input devices 8072 may include but are not limited to a physical keyboard, a function key (such as a volume control key or an on/off key), a trackball, a mouse, and a joystick. Details are not described herein. The memory 809 may be configured to store software programs and various data which include but are not limited to an application program and an operating system. The processor 810 may integrate an application processor and a modem processor. The application processor mainly processes an operating system, a user interface, an application program, and the like. The modem processor mainly processes wireless communication. It can be understood that the modem processor may alternatively be not integrated in the processor 810.

An embodiment of this application provides a readable storage medium, where the readable storage medium has a program or instructions store thereon, and when the program or instructions are executed by a processor, the processes of the foregoing charging method embodiment are implemented, with the same technical effects achieved. To avoid repetition, details are not repeated herein.

The processor is the processor in the electronic device in the foregoing embodiments. The readable storage medium includes a computer-readable storage medium, for example, a computer read-only memory (Read-Only Memory, ROM), a random access memory (Random Access Memory, RAM), a magnetic disk, or an optical disc.

Another embodiment of this application provides a chip, where the chip includes a processor and a communications interface, the communications interface is coupled to the processor, and the processor is configured to run a program or instructions to implement the processes of the foregoing charging method embodiment, with the same technical effects achieved. To avoid repetition, details are not described herein again.

It should be understood that the chip mentioned in this embodiment of this application may also be referred to as a system-level chip, a system chip, a chip system, a system-on-chip, or the like.

It should be noted that term "include", "comprise", or any of their variants are intended to cover a non-exclusive inclusion, so that a process, a method, an article, or a device that includes a list of elements not only includes those elements but also includes other elements that are not expressly listed, or further includes elements inherent to such process, method, article, or device. Without more constraints, an element preceded by "includes a ..." does not preclude the presence of other identical elements in the process, method, article, or apparatus that includes the element. In addition, it should be noted that the scope of the method and the apparatus in the embodiments of this application is not limited to executing the functions in an order shown or discussed, but may also include executing the functions in a substantially simultaneous manner or in a reverse order, depending on the functions involved. For example, the described methods may be performed in an order different from that described, and steps may alternatively be added, omitted, or combined. In addition, features described with reference to some examples may be combined in other examples.

By means of the foregoing description of the implementations, persons skilled in the art may clearly understand that the method in the foregoing embodiment may be implemented by software with a necessary general hardware platform. Certainly, the method in the foregoing embodiment may also be implemented by hardware. However, in many cases, the former is a preferred implementation. Based on such an understanding, the technical solutions of this application essentially, or the part contributing to the prior art may be implemented in a form of a computer software product. The computer software product is stored in a storage medium (for example, a ROM/RAM, a magnetic disk, or an optical disc), and includes several instructions for instructing a terminal (which may be a mobile phone, a computer, a server, an air conditioner, a network device, or the like) to perform the method described in the embodiments of this application.

The foregoing describes the embodiments of this application with reference to the accompanying drawings. However, this application is not limited to the foregoing specific embodiments. The foregoing specific embodiments are merely illustrative rather than restrictive. As instructed by this application, persons of ordinary skill in the art may develop many other forms without departing from the principle of this application and the protection scope of the claims, and all such forms fall within the protection scope of this application.

## Claims

1. A charging apparatus, comprising a housing, a first charging coil, a device detection module, and a coil adjusting module, wherein the first charging coil, the device detection module, and the coil adjusting module are all disposed in the housing, wherein

   the device detection module is connected to the coil adjusting module and configured to detect a device type of a to-be-charged device placed on an outer surface of the housing to obtain target device type information, and send the target device type information to the coil adjusting module; and
   the coil adjusting module is connected to the first charging coil and configured to adjust a size of the first charging coil based on the target device type information, enabling an adjusted size of the first charging coil to match a size of a second charging coil in the to-be-charged device.

2. The charging apparatus according to claim 1, wherein the coil adjusting module comprises a motor assembly, and the charging apparatus further comprises a rotation wheel, wherein

   the motor assembly is connected to the rotation wheel; and
   the first charging coil is wound on the rotation wheel.

3. The charging apparatus according to claim 1, wherein the charging apparatus further comprises a rotation wheel, and a first fixing structure and a line support of the rotation wheel;

   the first fixing structure is connected to an axis of the rotation wheel, and fixes the axis to an inner surface of the housing;
   a first end of the line support is connected to the first fixing structure, and a second end of the line support is connected to a first position in the housing;
   the first charging coil is wound on the rotation wheel;
   a first-stage line of the first charging coil is laid on the line support; and the first-stage line is a coil line of the first charging coil close to an end of the axis; and
   a second-stage line of the first charging coil is connected to the first position in the housing; and the second-stage line is a coil line of the first charging coil away from an end of the axis.

4. The charging apparatus according to claim 3, wherein

   an end of the second-stage line away from the axis is fixedly connected to the first position in the housing; and
   in a case that the rotation wheel rotates, the rotation wheel drives the first-stage line to move along the line support, changing the tightness of the first charging coil.

5. The charging apparatus according to claim 3, wherein

   an end of the first-stage line away from the axis is fixedly connected to the first position in the housing; and
   in a case that the rotation wheel rotates, the rotation wheel drives the second-stage line to tighten or loosen, changing the tightness of the first charging coil.

6. The charging apparatus according to claim 3, wherein the charging apparatus further comprises a coil support;

   the first charging coil is laid at the coil support;
   an end of the first-stage line away from the axis is fixedly connected to the first position in the housing; and
   in a case that the rotation wheel rotates, the rotation wheel drives the second-stage line to move along the coil support, changing the number of winding turns of the first charging coil around the axis.

7. The charging apparatus according to claim 3, wherein the charging apparatus further comprises a coil support;

the first charging coil is laid on the coil support;
an end of the second-stage line away from the axis is fixedly connected to the first position in the housing; and
in a case that the rotation wheel rotates, the rotation wheel drives the first-stage line to move along the line support, changing the number of winding turns of the first charging coil around the axis.

8. The charging apparatus according to claim 3, wherein the charging apparatus further comprises at least two coil limiting rods;

a first end of each of the coil limiting rods is connected to the first fixing structure;
a second end of each of the coil limiting rods is connected to a corresponding second position in the housing; and
each of the coil limiting rods is parallel to the first charging coil.

FIG. 1

FIG. 2

FIG. 3

FIG. 4

FIG. 5

Start

S602

Check, through NFC, whether a to-be-charged device is placed — No

Yes S604

Enable NFC mode detection to identify whether the to-be-charged device is a small-area device based on a detection result — No

S614

etermine whether a coil state of a first charging coil is a large-area state — No

S616

Start a motor assembly and drive a rotation wheel to rotate anticlockwise, enabling the rotation wheel to loosen the coil and making a switch to the large-area state

S608

Start a motor assembly and drive a rotation wheel to rotate clockwise, enabling the rotation wheel to wind the coil tightly and making a switch to the small-area state

Yes S606

No — Determine whether a coil state of a first charging coil is a small-area state

Yes

S618

Charge the to-be-charged device under the large-area state

Yes S610

Charge the to-be-charged device under the small-area state

S612

Determine whether charging has been completed

Yes

End

FIG. 6

700

Electronic device

701

Processor

702

Memory

FIG. 7

FIG. 8

## INTERNATIONAL SEARCH REPORT

| International application No. |
| --- |
| **PCT/CN2023/073703** |

| A. | CLASSIFICATION OF SUBJECT MATTER |
| --- | --- |

H02J 50/00(2016.01)i;H02J 50/10(2016.01)i;H02J 50/80(2016.01)i;H02J 7/00(2006.01)i

According to International Patent Classification (IPC) or to both national classification and IPC

| B. | FIELDS SEARCHED |
| --- | --- |

Minimum documentation searched (classification system followed by classification symbols)

   H02J

Documentation searched other than minimum documentation to the extent that such documents are included in the fields searched

Electronic data base consulted during the international search (name of data base and, where practicable, search terms used)

   CNTXT, CNABS, DWPI, ENTXT, ENTXTC, CNKI: 充电, 线圈, 调节, 大小, 位置, 电机, 检测, charge, coil, adjust, size, position, motor, detect

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 108879993 A (WUHU TUSVISION INFORMATION TECHNOLOGY CO., LTD.) 23 November 2018 (2018-11-23)<br>      description, paragraphs 27-53, and figures 1-6 | 1-8 |
| PX | CN 114400793 A (VIVO COMMUNICATION TECHNOLOGY CO., LTD.) 26 April 2022 (2022-04-26)<br>      claims 1-8 | 1-8 |
| A | CN 210430989 U (SOUTH CHINA UNIVERSITY OF TECHNOLOGY) 28 April 2020 (2020-04-28)<br>      entire document | 1-8 |
| A | CN 113904464 A (GUANGDONG OPPO MOBILE COMMUNICATIONS CO., LTD.) 07 January 2022 (2022-01-07)<br>      entire document | 1-8 |
| A | JP 2017147784 A (OSAKA TRANSFORMER CO., LTD.) 24 August 2017 (2017-08-24)<br>      entire document | 1-8 |

| ☐ Further documents are listed in the continuation of Box C. | ☑ See patent family annex. |
| --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **13 April 2023** | **19 April 2023** |

| Name and mailing address of the ISA/CN | Authorized officer |
| --- | --- |
| **China National Intellectual Property Administration (ISA/ CN)**<br>**China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

**INTERNATIONAL SEARCH REPORT**
Information on patent family members

International application No.

**PCT/CN2023/073703**

| Patent document cited in search report | | | Publication date (day/month/year) | Patent family member(s) | | | Publication date (day/month/year) |
|---|---|---|---|---|---|---|---|
| CN | 108879993 | A | 23 November 2018 | CN | 108879993 | B | 14 April 2020 |
| CN | 114400793 | A | 26 April 2022 | None | | | |
| CN | 210430989 | U | 28 April 2020 | None | | | |
| CN | 113904464 | A | 07 January 2022 | None | | | |
| JP | 2017147784 | A | 24 August 2017 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• CN 202210113910